(19) Europäisches Patentamt
European Patent Office
Office européen des brevets

(11) Veröffentlichungsnummer : **0 077 947**
**B1**

(12) # EUROPÄISCHE PATENTSCHRIFT

(45) Veröffentlichungstag der Patentschrift : **07.08.85**

(51) Int. Cl.$^4$ : **E 21 B 43/25**

(21) Anmeldenummer : **82109287.1**

(22) Anmeldetag : **07.10.82**

(54) **Verwendung von Amin-Schwefeldioxid-Addukten und Sulfitobetainen als Bakterizide gegen sulfatreduzierende Bakterien.**

(30) Priorität : **22.10.81 DE 3141922**
**02.11.81 DE 3143362**

(43) Veröffentlichungstag der Anmeldung : **04.05.83 Patentblatt 83/18**

(45) Bekanntmachung des Hinweises auf die Patenterteilung : **07.08.85 Patentblatt 85/32**

(84) Benannte Vertragsstaaten : **AT DE FR GB**

(56) Entgegenhaltungen :
**DE-A- 1 768 407**
**DE-A- 1 936 789**
**DE-A- 2 831 100**
**GB-A- 2 001 377**
**US-A- 3 198 733**
**US-A- 4 193 452**

(73) Patentinhaber : **BASF Aktiengesellschaft**
**Carl-Bosch-Strasse 38**
**D-6700 Ludwigshafen (DE)**

(72) Erfinder : **Distler, Harry, Dr.**
**In den Hahndornen 5**
**D-6719 Bobenheim (DE)**
Erfinder : **Widder, Rudi, Dr.**
**In der Taesch 7**
**D-6906 Leimen (DE)**
Erfinder : **Barthold, Klaus, Dr.**
**Paulusbergstrasse 4**
**D-6800 Mannheim (DE)**
Erfinder : **Elfers, Guenther**
**Keplerstrasse 22**
**D-6902 Sandhausen (DE)**

**EP 0 077 947 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft die Verwendung bestimmter mit Schwefeldioxid umgesetzter Amine sowie bestimmter Sulfitobetaine als Wirkstoffe gegen sulfatreduzierende Bakterien, die z. B. in sulfathaltigen Prozeßwässern in der Erdölindustrie vorkommen.

Sulfatreduzierende Bakterien bekannt unter der wissenschaftlichen Bezeichnung « Desulfovibrio desulfuricans » decken ihren Sauerstoffbedarf mit den in Prozeßwässern anwesenden Sulfaten, wie Calcium-, Magnesium-, Eisen- oder Alkalimetallsulfat, denen sie den chemisch gebundenen Sauerstoff reduktiv entziehen, wobei Sulfide entstehen bzw. je nach pH-Bereich Schwefelwasserstoff. In der erdölfördernden und -verarbeitenden Industrie sind solche relativ sulfatreiche Wässer an den Prozessen mehr oder minder beteiligt, so daß die Anwesenheit dieser Bakterien zu erheblichen Problemen führt. Zur Aufrechterhaltung der Drücke in den Erdöllagerstätten ist es allgemein üblich, das abgetrennte Lagerstättenwasser erneut einzupressen (Sekundärförderung). Diese Einpreßwässer müssen frei von den obengenannten Bakterien sein, da deren Vermehrung zu Bakteriennestern führt, unter denen bevorzugt Korrosion entsteht. Außerdem kann die Vermehrung der Bakterien die Permeabilität der Lagerstoffe — insbesondere in die Umgebung der Einpreßsonde — reduzieren, so daß höhere Einpreßdrucke aufzuwenden sind. Man hat daher bakterizide Mittel zugesetzt, was aber die Probleme bisher noch nicht optimal beseitigen konnte. Bekanntlich werden Bakterien nach längerer Bekämpfung mit bestimmten Bakteriziden gegen letztere resistent, so daß man gezwungen ist, nach bestimmten Zeitabschnitten die Bakterizide auszutauschen. Die bisher eingesetzten Mittel, quaternäre Ammoniumsalze, wie Trimethylbenzylammoniumchlorid, Dioctyldimethylammoniumchlorid oder Aldehyde, wie Formaldehyd oder Glutardialdehyd, stellen einerseits eine noch nicht genügend breite Palette austauschfähiger Wirkstoffe dar und sind andererseits vielfach noch nicht genügend wirksam, so daß sie in größeren Konzentrationen eingesetzt werden müssen. Außerdem sind diese Verbindungen meistens in der Ölphase gelöst, während sich die Bakterien in der Wasserphase aufhalten, sodaß letztere sich ungestört entfalten können und zu den erwähnten Schwierigkeiten führen.

Das Ziel der Erfindung bestand darin, weitere gegen sulfatreduzierende Bakterien wirksame Verbindungen zu finden, die auch gegen resistente Bakterienstämme wirksam und damit gegen andere Mittel austauschbar sind, und die zudem auch wirksamer und somit in geringeren Mengen einsetzbar sind.

Dieses Ziel wird mit Verbindungen erreicht, wie die gemäß dem Patentanspruch definiert sind.

Die Verbindungen gehorchen der Formel I

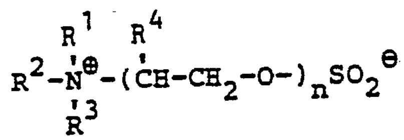

(I)

$R^1$ bedeutet einen $C_8$- bis $C_{20}$-Alkylrest, vorzugsweise einen $C_{10}$- bis $C_{18}$-Alkylrest. $R^2$, $R^3$ und $R^4$, die gleich oder verschieden sind, können für Wasserstoff oder einen $C_1$- bis $C_4$-Alkylrest und n für 0 oder 1 stehen. Vorzugsweise sind die Reste $R^2$ und $R^3$ gleich und bedeuten die Methyl- oder Ethylgruppe. Ebenso steht $R^4$ bevorzugt für Wasserstoff oder eine Methyl- oder Ethylgruppe.

Ausgangsprodukte für die Synthese der Amin-Schwefeldioxid-Addukte (n = 0) wie auch der Sulfitobetaine (n = 1) sind Amine der allgemeinen Formel II

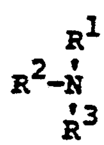

(II)

in der die Reste $R^1$, $R^2$ und $R^3$ die oben genannte Bedeutung besitzen.

Beispielsweise können folgende Amine verwendet werden : Dimethyl-decyl-, -undecyl-, -dodecyl-, (-lauryl)-, -tridecyl- oder -tetradecylamin bzw. die entsprechenden Diethylhomologen. Geeignet dafür sind auch Amingemische wie Dimethyl-decylamin/Dimethyl-dodecylamin oder Dimethyl-dodecylamin/Dimethyl-tetradecylamin.

Die Herstellung der erfindungsgemäß zu verwendenden Amin-Schwefeldioxid-Addukte (n = 0) ist einfach und geschieht in der Weise, daß man die entsprechenden Amine in stöchiometrischem Verhältnis mit Schwefeldioxid umsetzt (DE-OS 1 936 789).

Die erfindungsgemäß zu verwendenden Sulfitobetaine (n = 1) erhält man entweder aus den genannten Amin-Schwefeldioxid-Addukten durch Umsetzen mit einem Alkylenoxid der Formel III

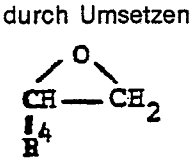

(III)

wobei $R^4$ gemäß Formel I definiert ist, vorzugsweise mit Ethylenoxid, 1,2-Propylenoxid oder 1,2-Butylenoxid, oder durch direkte Synthese aus Amin, Schwefeldioxid und Alkylenoxid (Tenside 6, 241 (1969)).

Weder die Amin-Schwefeldioxid-Addukte noch die Sulfitobetaine zeigen die Nachteile, die bei den bisher verwendeten quartären Ammoniumsalzen zu beobachten sind — sie sind sowohl öl — als auch wasserlöslich und werden auch in silikathaltigen Öllagerstätten kaum absorbiert. Sie sind daher in bedeutend geringeren Mengen einsetzbar und stellen auch eine wertvolle Bereicherung der Palette der Bakterizide, vor allem auch gegen resistente Stämme, dar. Ihre Einsatzmenge liegt — bezogen auf die Rohöl (emulsionen) — bei 3 bis 10 ppm. Sie richtet sich nach der Provenienz der Rohöle. Die hohen biociden Hemmwerte sind insofern überraschend, als man annehmen müßte, daß der vierwertige Schwefel in den Aminaddukten durch die sulfatreduzierenden Bakterien ebeno reduziert würde wie der sechswertige, und somit eher eine verschlechterte Wirkung zu erwarten gewesen wäre.

In den folgenden Beispielen soll die Erfindung näher erläutert werden.

## Beispiel 1

Als Versuchsprodukt wurde ein Amin-Schwefeldioxid-Addukt der Formel

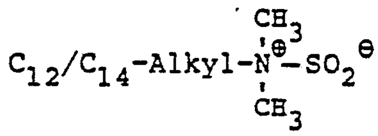

eingesetzt.

Als Prüfmethode wurde mit geringfügigen Abänderungen die API RP 38-Methode (Recommended Practice for Biological Analysis of Water Flood Injection Waters, API RP 38, American Petroleum Institute, May 1959) angewendet. In mit Gummimembranen verschlossene Ampullen, die jeweils 9 ml einer Nährlösung enthielten, wurden jeweils 1 ml einer Bakterienstammkultur (Desulfovibrio desulfuricans) sowie verschiedene Mengen (bezogen auf Nährlösung 3 bis 10 ppm) des Aminadduktes injiziert. Aufgrund der Zusammensetzung der Nährlösung entsteht durch den Stoffwechsel der Bakterien schwarzes Eisensulfid, dessen Ausfällung die Anwesenheit der Bakterien anzeigt. Die Versuche wurden bei einer Dauer von 21 Tagen und einer Temperatur von 36 °C durchgeführt. Die wäßrige Nährlösung enthielt folgende Bestandteile :

| | |
|---|---|
| Hefeextrakt | 1.00 g/l |
| 1(+)-Ascorbinsäure | 0.10 g/l |
| Natriumlactat (als wäßrige Lösung von 50 Gew.%) | 4.00 g/l |
| $Mg_2SO_4$ | 0.20 g/l |
| $K_2HPO_4$ | 0.01 g/l |
| Ammoniumeisen(II)sulfat | 0.20 g/l |
| NaCl | 10.00 g/l |
| pH-Wert = 7.54 (mit NaOH eingestellt) | |

Es zeigte sich, daß bereits eine Dosierung von 3 ppm an Aminaddukt innerhalb des Versuchszeitraums jegliche Sulfidbildung unterband. Bei höherer Dosierung (bis zu 10 ppm) blieben die Proben monatelang unverändert.

Außerdem wurden Rohölemulsionen der Provenienz Assling, Landau und Emlichheim, die die erwähnten Bakterien enthalten, geprüft. Hierbei wurde das Formationswasser abgetrennt und wie oben angeführt dem API RP 38-Test unterworfen.

Hierbei zeigte ein Einsatz von nur 3 ppm an Aminaddukt bei Assling und Emlichheim und von nur 6 ppm bei Landau eine vollständige Unterbindung der Sulfidbildung.

Vergleichende Tests mit dem bekannten Biocid Dioctyldimethylammoniumchlorid ergaben jeweils, daß mindestens 20 ppm an Wirksubstanz erforderlich waren, um die Sulfid-Bildung während des Prüfzeitraums zu unterdrücken.

## Beispiel 2

Ein Sulfitobetain der Formel

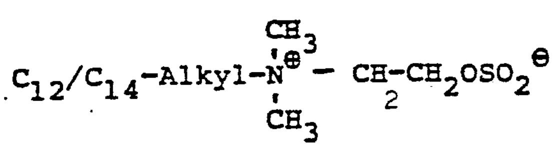

wurde als Biocid auf Wirksamkeit gegen sulfatreduzierende Bakterien geprüft. Die im Beispiel 1 beschriebene Prüfmethode wurde verwendet. Das geprüfte Produkt zeigte eine biocide Wirkung bei einer Dosierung von 6 ppm (Assling, Emlichheim) bzw. 10 ppm (Landau).

Beispiel 3

Ein Sulfitobetain der Formel

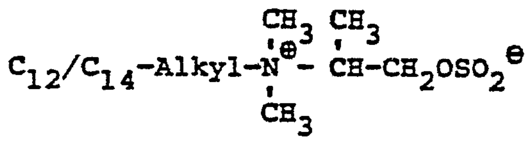

wurde als Biocid auf Wirksamkeit gegen sulfatreduzierende Bakterien geprüft. Die im Beispiel 1 beschriebene Prüfmethode wurde verwendet. Das geprüfte Produkt zeigte eine biocide Wirkung bei einer Dosierung von 10 ppm (Assling, Landau) bzw. 6 ppm (Emlichheim).

Beispiel 4

Ein Sulfitobetain der Formel

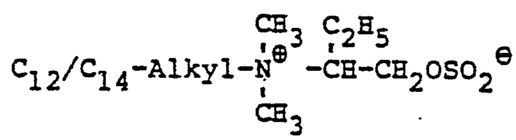

wurde als Biocid auf Wirksamkeit gegen sulfatreduzierende Bakterien nach der im Beispiel 1 beschriebenen Methode geprüft. Das geprüfte Produkt zeigte eine biocide Wirkung bei einer Dosierung von 10 ppm (Assling, Landau) bzw. 3 ppm (Emlichheim).

**Patentansprüche**

1. Verwendung von Verbindungen der Formel I

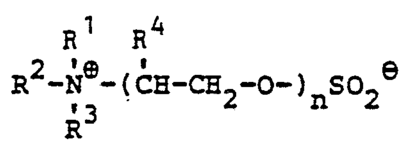

(I)

in der $R^1$ einen $C_8$- bis $C_{20}$-Alkylrest bedeutet, $R^2$, $R^3$ und $R^4$ gleich oder verschieden sind und für Wasserstoff oder für einen $C_1$- bis $C_4$-Alkylrest und n für 0 oder 1 stehen, als Wirkstoffe gegen sulfatreduzierende Bakterien in Prozeßwässern der Erdölindustrie.

2. Verwendung von Verbindungen gemäß Anspruch 1, in denen $R^1$ einen $C_{10}$- bis $C_{18}$-Alkylrest bedeutet.

3. Verwendung von Verbindungen gemäß Anspruch 1, in denen $R^2$ und $R^3$ die gleiche Bedeutung haben und für eine Methyl- oder Ethylgruppe stehen.

4. Verwendung von Verbindungen gemäß Anspruch 1, in denen $R^4$ ein Wasserstoffatom, eine Methyl- oder Ethylgruppe bedeutet.

**Claims**

1. The use of a compound of the formula I

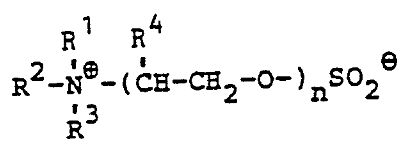

(I)

where $R^1$ is alkyl of 8 to 20 carbon atoms, $R^2$, $R^3$ and $R^4$ are identical or different and each denotes

hydrogen or alkyl of 1 to 4 carbon atoms, and n is 0 or 1, as an active ingredient against sulphate-reducing bacteria in process waters in the petroleum industry.

2. The use of a compound as claimed in claim 1, where $R^1$ is alkyl of 10 to 18 carbon atoms.

3. The use of a compound as claimed in claim 1, where $R^2$ and $R^3$ have the same meaning and each denotes methyl or ethyl.

4. The use of a compound as claimed in claim 1, where $R^4$ is hydrogen, methyl or ethyl.

**Revendications**

1. Utilisation de composés de formule I

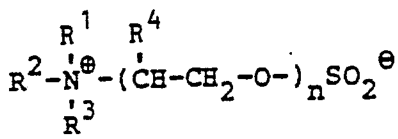

(I)

dans laquelle $R^1$ représente un radical alkyle en $C_8$ à $C_{20}$, $R^2$, $R^3$ et $R^4$ sont semblables ou différents et sont mis chacun pour un atome d'hydrogène ou pour un radical alkyle en $C_1$ à $C_4$ et n est égal à 0 ou 1, comme substances actives contre les bactéries réduisant les sulfates, dans des eaux de traitement de l'industrie pétrolière.

2. Utilisation de composés selon la revendication 1, dans lesquels $R^1$ représente un radical alkyle en $C_{10}$ à $C_{18}$.

3. Utilisation de composés selon la revendication 1, dans lesquels $R^2$ et $R^3$ ont la même signification et sont mis pour un groupe méthyle ou éthyle.

4. Utilisation de composés selon la revendication 1, dans lesquels $R^4$ représente un atome d'hydrogène, un groupe méthyle ou éthyle.